# EUROPÄISCHE PATENTSCHRIFT

(11) **EP 2 091 715 B1**
(45) Veröffentlichungstag und Bekanntmachung des Hinweises auf die Patenterteilung: **20.07.2011**
(21) Anmeldenummer: 07846696.8
(22) Anmeldetag: 21.11.2007
(51) Int. Cl.: B29C 49/78, B29C 49/12, B29C 49/36, B29C 49/62

(54) **VERFAHREN ZUR HERSTELLUNG VON BEHÄLTERN**
METHOD FOR THE PRODUCTION OF CONTAINERS
PROCÉDÉ DE FABRICATION DE RÉCIPIENTS

(30) Priorität: 22.12.2006 DE 102006061301
(43) Veröffentlichungstag der Anmeldung: 26.08.2009
(73) Patentinhaber: Krones AG, 93073 Neutraubling (DE)
(72) Erfinder: DETROIS, Christian, 88190 Golbey (FR); JANSEN, Roman, 41849 Wassenberg (DE)
(86) Internationale Anmeldenummer: PCT/EP2007/010052
(87) Internationale Veröffentlichungsnummer: WO 2008/080452

(56) Entgegenhaltungen:
- WO-A-2005/000558
- DE-A1- 19 843 053
- US-B1- 6 709 611

## Beschreibung

Die Erfindung bezieht sich auf ein Verfahren zum Herstellen von Behältern aus Kunststoff in einer Blasformmaschine der im Oberbegriff von Anspruch 1 erläuterten Art.

Ein derartiges Verfahren ist aus der WO 2004/020173 bekannt. Diese Druckschrift betrifft das so genannte Blasformen, ein gängiges Verfahren zum Herstellen von Behältern aus Kunststoff, insbesondere von Flaschen, bei dem ein Vorformling, der so genannte Preform, der bereits die zum Herstellen des Behälters notwendige Materialmenge enthält, jedoch wesentlich kleiner und dickwandiger als der Behälter ist, durch Einblasen von Druckluft, gegebenenfalls unterstützt durch mechanische Reck- und Formmittel, zum fertigen Behälter aufgeblasen wird. Beim Blasen muss jedoch sichergestellt werden, dass der fertige Behälter eine zumindest angenähert konstante Wanddicke aufweist. Um dies zu erreichen, wird ein vorbestimmter Ablauf des Blasvorganges festgelegt, beispielsweise wird mit einem geringeren Druck vorgeblasen und anschließend mit einem höheren Druck fertiggeblasen usw. Um sicherzustellen, dass dieser vorbestimmte Ablauf des Blasvorganges eingehalten wird, wird der Druck der Blasluft direkt überwacht und bei Abweichungen vom vorgegebenen Druckverlauf entsprechend nachgeregelt. Zum Regeln des Druckes wird ein Proportionalventil eingesetzt, an dem der Drucksensor befestigt ist. Es wurde jedoch festgestellt, dass dieses Verfahren zum Steuern oder Regeln der Blasluft, das auf einer direkten Druckmessung beruht, noch optimiert werden kann, besonders im Hinblick auf die erzielte Wanddickenverteilung.

Ein Verfahren und eine Vorrichtung zur Steuerung eines Blasvorgangs der oben beschriebenen Art ist auch aus der DE-A.-198 43 053 bekannt. Mit dem bekannten Verfahren sollen die Materialeigenschaften von im Blasformverfahren hergestellten Kunststoffbehälter vergleichmäßigt werden, indem Möglichkeiten geschaffen werden, auf Blasparameter Einfluss zu nehmen. Diese zu beeinflussenden Blasparameter sind beispielsweise die Unterteilung des Blasvorgangs in eine Vorblasphase und eine Hauptblasphase, ein höherer Blasdruck in der Hauptblasphase als in der Vorblasphase, die Veränderung des Druckverlaufs, die Veränderung der Zeitdauer von Vorblasphase und Hauptblasphase bzw. die Verschiebung des Umschaltzeitpunktes zwischen der Vorblasphase und der Hauptblasphase, die Reckgeschwindigkeit und der Zeitpunkt des Beginns des Reckvorgangs. Darüber hinaus wird erwähnt, dass eine weitere Möglichkeit darin bestehen würde, den Volumenstrom der Blasluft während der Vorblasphase zu verändern. Wie und durch welche Maßnahme diese geschieht, und ob die Veränderung entsprechend eines vorgegebenen Verlaufs erfolgt, ist dieser Druckschrift nicht zu entnehmen.

Die US-A-6 709 611 zeigt ein Verfahren zum Herstellen von blasgeformten Hohlkörpern, wobei die Blasluft nicht durch einen Kompressor, sondern für jede Blasform durch eine eigene Kolben-Zylinder-Einheit bereitgestellt wird, in der eingeführte Blasluft durch einen Zylinder in der gewünschten Weise verdichtet und dadurch ihr Druck auf den gewünschten Wert erhöht wird.

Der Erfindung liegt somit die Aufgabe zugrunde, ein Verfahren zum Herstellen von Behältern aus Kunststoff in einer Blasformmaschine bereitzustellen, mit dem die Qualität der Behälter verbessert werden kann.

Die Aufgabe wird durch die im Anspruch 1 angegebenen Merkmale gelöst.

Die vorliegende Erfindung basiert auf der Erkenntnis der Erfinder, dass es nicht der Druck im zu blasenden Behälter ist, der die Qualität des Blasvorgangs bestimmt, sondern dass es von dem zeitlichen Verlauf der Masse bzw. des Volumens der in den Preform eingeleiteten Blasluft abhängt, wie sich der Preform reckt; d.h. es ist letztendlich nicht der eigentliche Druck im Preform oder einer aufgeweiteten Blase nach dem Vorblasvorgang die wichtigste Größe, die den Ausformungsverlauf bestimmt, sondern der Massen- bzw. Volumenstrom in den Preform oder die Blase hinein. Der Druck ist lediglich eine Materialantwort des Kunststoffs auf den Massen- bzw. Volumenstrom. Das auf diesen Erkenntnissen beruhende, erfindungsgemäße Verfahren basiert demzufolge auf einem vorbestimmten Verlauf des Massenstroms der Blasluft, wobei die in den Preform oder die Blase eingeleitete Blasluft gemäß diesem vorbestimmten Verlauf gesteuert oder gegebenenfalls auch geregelt wird. Es konnte festgestellt werden, dass sich bei einer Führung der Blasluft nach einem vorgegebenen Verlauf des Massenstroms die Materialverteilung zwischen Boden und Einfüllöffnung des Behälters sehr gut beeinflussen lässt, so dass Behälter mit der gewünschten Wanddickenverteilung wesentlich exakter hergestellt werden können.

Der Verlauf des Massenstroms der Blasluft kann anhand verschiedener Kriterien im Ablauf des Blasvorgangs vorgegeben werden, beispielsweise als zeitlicher Verlauf oder anhand aufeinander folgender Verfahrenszustände, wie beispielsweise von verschiedenen Winkelstellungen eines Blasrades.

Von besonderem Vorteil ist die Verwendung eines an sich aus der Hydraulik bekannten Proportionalventils, da dieses schnell schaltet und auch für einen hohen Durchfluss ausgelegt werden kann.

Beim erfindungsgemäßen Verfahren können verschiedene Überwachungsfunktionen vorgesehen sein. So kann der Verlauf des Massenstroms bei Qualitätsabweichungen am Behälter gegebenenfalls korrigiert werden. So ist es möglich, den hergestellten Behälter "in-line", also nach der Herstellung aber noch in der Maschine / Anlage zu überprüfen, so z.B. die Wanddicke, die Bodenmasse oder die Bodengeometrie des Behälters, um dann direkt eine Anpassung des Massenstromes vorzunehmen.

Es ist weiterhin möglich, den Massenstrom zu messen und zur Regelung desselben einzusetzen.

Bei Verwendung eines Proportionalventils kann dieses gleichzeitig zum Entlüften des Behälters nach dem Ende des Blasvorgangs eingesetzt werden, so dass hier zusätzliche Vorkehrungen nicht mehr notwendig sind.

In Verbindung mit einem weiteren Ventil kann das Proportionalventil auf einfache Weise auch zum Recyceln der Blasluft verwendet werden.

Das Proportionalventil kann auf verschiedene Arten ausgestaltet sein, wie z.B. mit einem Ventilschieber oder einem Ventilkegel. Weiterhin kann eine bauliche Variation so aussehen, dass der Schieber bzw. der Kegel die Positionen durch feste Anschläge einnimmt, er kann aber auch lagegeregelt sein. Eine Lageregelung ist zwar komplizierter, aber genauer.

In der gesamten Beschreibung ist immer die Rede von der Steuerung bzw. Regelung des Massenstromes des Fluids. Da der Massenstrom über die Dichte des Fluids direkt mit dem Volumenstrom zusammenhängt, ist das beschriebene Verfahren anstatt als massenstromgesteuert auch als volumenstromgesteuert durchzuführen.

Ausführungsbeispiele der Erfindung werden nachfolgend anhand der Zeichnungen näher erläutert. Es zeigen:
- Fig. 1: ein erstes Ausführungsbeispiel einer zur Durchführung des erfindungsgemäßen Verfahrens geeigneten Vorrichtung in schematischer Teildarstellung beim Belüften eines Behälters,
- Fig. 2: die Vorrichtung nach Fig. 1 beim Entlüften eines Behälters,
- Fig. 3: ein zweites Ausführungsbeispiel einer zum Durchführen des erfindungsgemäßen Verfahrens geeigneten Vorrichtung in schematischer Teildarstellung beim Belüften eines Behälters,
- Fig. 4: die Vorrichtung nach Fig. 3 in einer die Blasluft recycelnden Stellung, und
- Fig. 5: ein Diagramm der Ventilsteuerung und des vorbestimmten Verlaufs des Massenstroms über der Zeit.
- Fig. 6: eine Draufsicht auf eine Anlage zum Herstellen von Behältern, insbesondere Kunststoffflaschen

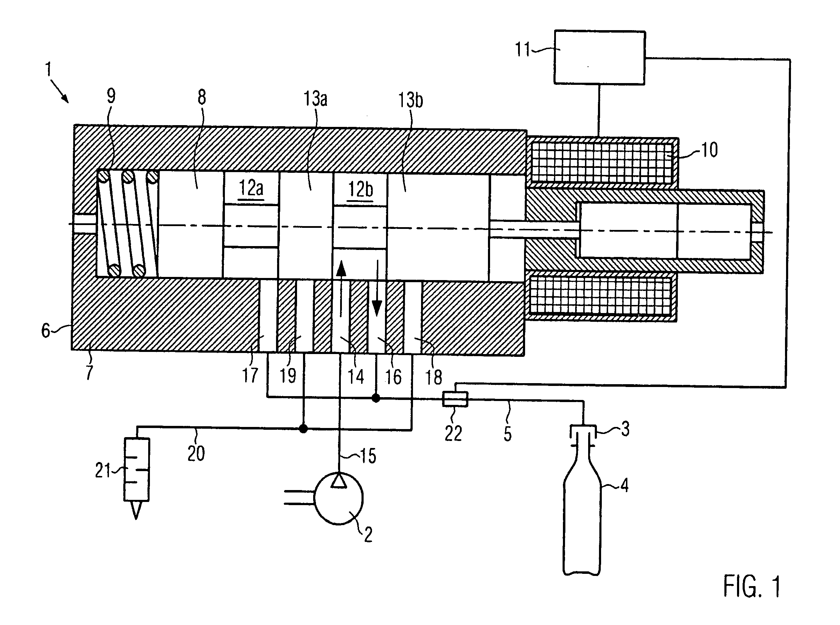

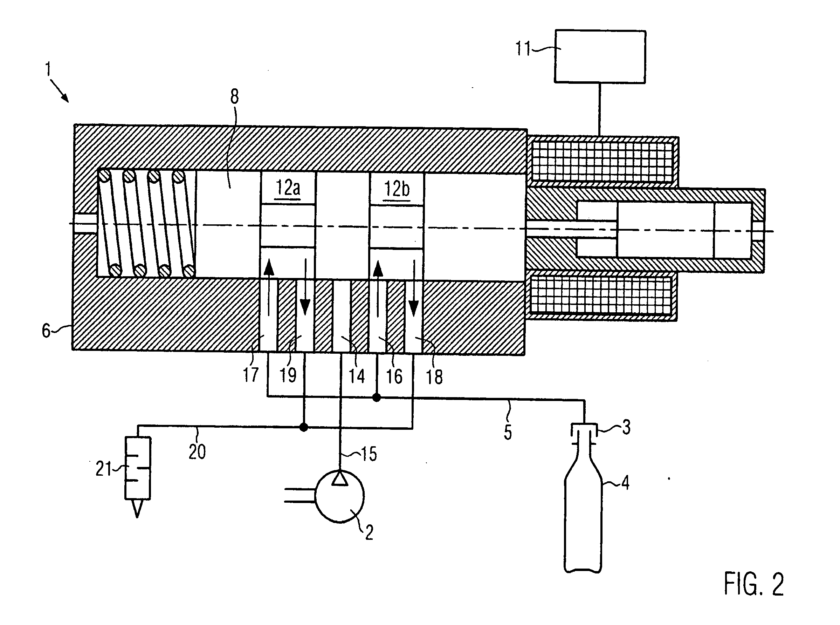

Aus den Fig. 1 und 2 ist ein erstes Ausführungsbeispiel einer Vorrichtung 1 zum Durchführen des erfindungsgemäßen Verfahrens ersichtlich. Die Vorrichtung 1 ist äußerst schematisiert und beschränkt auf die zur Erläuterung der Erfindung notwendigen Bauteile. Die Vorrichtung 1 kann Teil jeder bekannten Behälterherstellungsmaschine, insbesondere Blasformmaschine, insbesondere Streckblasmaschine sein.

Die Vorrichtung 1 enthält eine Druckluftquelle 2, die bevorzugt als ein- oder mehrstufiger Kompressor ausgebildet oder mit diesem verbunden ist. Die Druckluftquelle 2 sollte in der Lage sein, Druckluft von 0 bis zu 40, bevorzugt bis zu 50 bar bereitzustellen. Die Vorrichtung 1 enthält weiterhin eine der üblichen Blasformen, die hier nicht dargestellt ist. In die Blasformen wird ein Vorformling oder ein Preform aus Kunststoff, insbesondere PET, herkömmlicher Art eingesetzt und als Behälter 4 wieder entnommen. Die Blasform steht über eine Blasluftleitung 5 mit der Druckluftquelle 2 in Verbindung. In die Blasluftleitung 5 ist eine Einrichtung 6 zum Verändern eines Massenstroms der in die Blasform eingeleiteten Druckluft eingeschaltet. Als Einrichtung 6 kann jedes Element verwendet werden, das in der Lage ist, mit der für eine korrekte Durchführung des Blasvorgangs notwendigen Geschwindigkeit zu schalten, und das einen Durchflussquerschnitt einer Blasluftleitung über einen ausreichend großen Bereich verändern kann, um die unterschiedlichen Massenströme der Blasluft, die zum Erreichen einer bestimmten Form des Behälters 4 notwendig sind, bereitstellen zu können. Die Einrichtung 6 ist bevorzugt als Proportionalventil ausgebildet, wobei ein übliches Proportionalventil aus der Hydraulik verwendet und an den Einsatzzweck zum Verändern eines Massenstroms von Druckluft angepasst wird. Insbesondere kann das Proportionalventil 6 so verändert werden, dass der Einfluss von Positionierungsungenauigkeiten auf den durchfließenden Massenstrom zurückgedrängt wird, der Durchfluss somit wesentlich weniger sensibel auf eine Positionierungenauigkeit reagiert.

Das in der Vorrichtung 1 verwendete Proportionalventil ist als 3/2-Wegeventil ausgebildet und enthält ein Gehäuse 7, in dem ein Ventilkolben 8 gegen die Kraft einer Feder 9 axial verschiebbar ist. Der Ventilkolben 8 wird durch einen Elektromagneten 10 von einer Steuerung 11 gesteuert. Der Ventilkolben 8 ist in Axialrichtung aufeinander folgend in unterschiedliche Bereiche geteilt, wobei in der dargestellten Ausgestaltung zwei Umlenkbereiche 12a und 12b und zwei Schließbereiche 13a und 13b einander abwechseln.

Das Gehäuse 7 wird von Ein- und/oder Auslassöffnungen durchsetzt, wobei eine Einlassöffnung 14 über eine Druckluftleitung 15 mit der Druckluftquelle 2 verbunden ist. Es sind weiterhin zwei Öffnungen 16, 17 vorgesehen, die über die Blasluftleitung 5 mit der Blasform verbunden sind. Schließlich sind zwei Öffnungen 18 und 19 vorgesehen, die über eine Entlüftungsleitung 20 mit der Umgebung verbunden sind, bevorzugt über einen Schalldämpfer 21.

Vor Beginn des Blasvorgangs wird ein Verlauf eines Massenstroms der Blasluft in Abhängigkeit vom vorbestimmten Ablauf des Blasvorganges vorgegeben. Dieser vorgegebene Verlauf wird dann während des Blasens durch Veränderungen im Durchflussquerschnitt der Öffnungen 14, 16, 17, 18, 19 realisiert.

Zu diesem Zweck wird über die Steuerung 11 im dargestellten Ausführungsbeispiel der Ventilkolben 8 des Proportionalventils 6 so verschoben, dass der zweite Umlenkraum 12b die Druckluft-Einlassöffnung 14 mit der Öffnung 16 zur Blasform verbindet. Die zur Entlüftungsleitung 20 führenden Öffnungen 18 und 19 sind durch die Stellbereiche 13a, 13b verschlossen, und die Öffnung 17 ist in den ersten Umlenkraum 12a offen und dient dem Druckausgleich.

Dann wird der Ventilkolben 8 entsprechend eines vorbestimmten Verlaufs M des Massenstroms verschoben, der in der Steuerung 11 abgespeichert ist, wodurch der Durchflussquerschnitt der Öffnung 16 in der vorgegebenen Weise vergrößert und verkleinert wird.

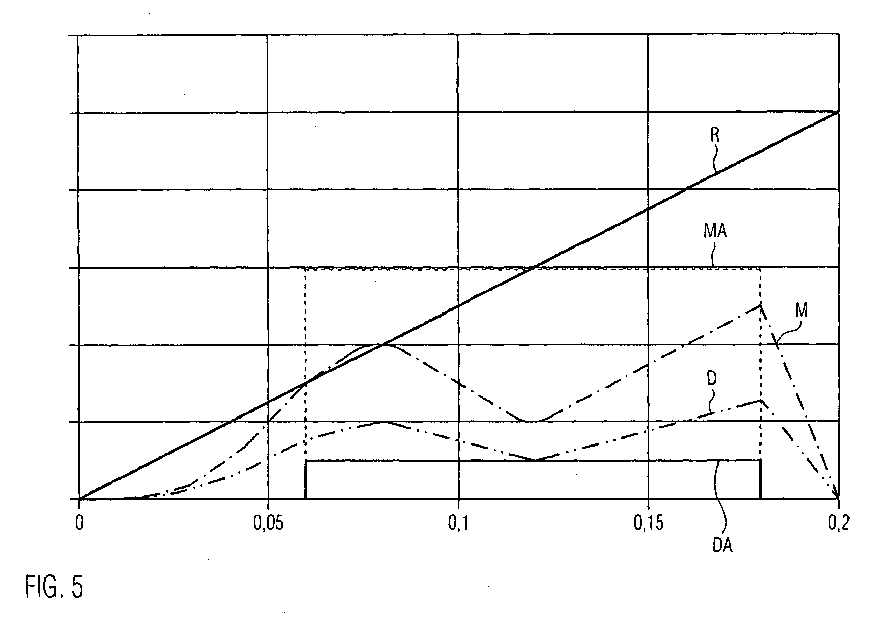

Fig. 5 zeigt ein Diagramm mit verschiedenen Kurven, wobei auf der x-Achse die Zeit in Sekunden und auf der y-Achse die Ventilstellung, der Massenstrom sowie der Reckweg aufgetragen sind.
In Fig. 5 ist ein Beispiel eines bevorzugten, zeitlichen Verlaufs M des Massenstroms M aufgetragen (strichpunktierte Kurve). Weiterhin aus Fig. 5 ist ersichtlich, dass der Kurvenverlauf der Öffnungsstellungen des Durchflussquerschnittes entlang der Kurve D (Strichlinierte Kurve) dem vorbestimmten zeitlichen Verlauf des Massenstroms M entspricht. Dabei ist zunächst ein Vorblasvorgang zu erkennen, in dem der Durchflussquerschnitt bis auf einen ersten Maximalwert ansteigt, durch den ein erster Maximalwert des Massenstroms in den Preform gelangt. Dadurch wird zunächst ein erstes Aufblähen des Preforms erreicht, bis sich ein Druckausgleich zwischen der Blasluft im Inneren des Preforms / der Blase und der Materialantwort des zu reckenden Kunststoffes ergibt. Da der Druck mit zunehmendem Fließen des Materials abnimmt, würde hier bei einer herkömmlichen Druckregelung eine Stellantwort erfolgen und der Druck nachgeregelt werden.

Zum Fertigblasen wird der Massenstrom gemäß der Kurve M auf einen zweiten Maximalwert gebracht, der höher ist als der Maximalwert beim Vorblasen. Demgemäß wird auch der Durchflussquerschnitt stärker geöffnet, als dies für das Vorblasen erforderlich ist.

Zwischen dem Vorblasen und dem Fertigblasen wird der Massenstrom verringert und dementsprechend der Durchflussquerschnitt verkleinert. Durch diese Maßnahme kann die Verteilung des Materials im Bereich zwischen dem Boden und der Einlassöffnung des Behälters 4 beeinflusst werden. Dabei wird insbesondere die Verteilung des Materials zwischen der Mitte des Behälters und dem Boden vergleichmäßigt.

Zum Vergleich ist in Fig. 5 eine Massenstromkurve MA (punktierte Linie) und die zugeordnete Ventilstellung DA (dünne durchgezogene Linie) aufgetragen, die sich ergeben würde, wenn der Massenstrom der Blasluft nicht erfindungsgemäß nach einem vorgegebenen Verlauf, sondern allein durch das An- und Abschalten der Druckluftzufuhr verändert würde. Diese Kurven MA, Da beschreiben also einen der bisher bekannten Vorgänge beim Blasen von Behältern 4.

In Fig. 5 ist weiterhin der prozentuale Reckweg von 0 bis 100 %, d.h. vom Preform bis zum fertigen Behälter, als gerade Linie R aufgetragen. Fig. 5 zeigt somit, dass durch ein einfaches An- und Abschalten der Druckluftzufuhr, bei einer zweckmäßigen Anpassung des Drucks der Druckluft, der Behälter bis auf 100 % gereckt wird, auf den Verlauf des Massenstroms zwischen 0 und 100 % Reckung jedoch keinerlei Einfluss genommen werden kann.

Wie Fig. 1 zeigt, kann in der Blasluftleitung 5 zur Blasform oder an einer anderen geeigneten Stelle eine Einrichtung 22 zum Überprüfen des Massenstroms der Druckluft angeordnet werden. Diese Einrichtung 22, beispielsweise einer der üblichen Durchflussmesser, ist mit der Steuerung 11 verbunden und kann gegebenenfalls regelnd eingreifen, wenn der tatsächliche Massenstrom vom vorgegebenen Massenstrom abweicht. Weiterhin können nicht gezeichnete Qualitätsprüfeinrichtungen, beispielsweise Messeinrichtungen der Wanddicke, ebenfalls mit der Steuerung 11 verbunden werden und beispielsweise entweder den vorgegebenen Verlauf M des Massenstroms für alle nachfolgenden Blasvorgänge verändern oder andere Veränderungen durchführen. Weiterhin kann der Blasdruck wie üblich überwacht und die festgestellten Druckwerte z. B. zur Dokumentation in einer Blaskurve verarbeitet werden.

Der Verlauf M des Massenstroms der Blasluft, nach dem der Durchflussquerschnitt verändert wird, kann jedoch außer als zeitlicher Verlauf, wie in Fig. 5 dargestellt, auch als Verlauf in Abhängigkeit von bestimmten Verfahrensparametern oder bestimmten Verfahrenszuständen vorgegeben werden. So kann der Verlauf des Massenstroms der Blasluft auch in Abhängigkeit von einer bestimmten Stelle eines Blasrades einer herkömmlichen Blasformmaschine vorgegeben werden, so dass jeder Stellung des Blasrades ein bestimmter Durchflussquerschnitt der Blasluftzufuhr zugeordnet ist.

Bei Verwendung des in Fig. 1 gezeichneten Proportionalventils als Einrichtung zum Verändern des Durchflussquerschnittes, kann der Behälter 4 nach dem Fertigblasen auf einfache Weise entlüftet werden. Die Entlüftungsstellung ist in Fig. 2 gezeigt. Der Ventilkolben 8 ist in eine Stellung verschoben, in der die Einlassöffnung 14 der Druckluftleitung 15 von der Druckluftquelle 2 verschlossen ist, beide Öffnungen 16, 17 mit der Blasluftleitung 5 zur Blasform und die beiden anderen Öffnungen 18, 19 mit der Entlüftungsleitung 20 verbunden sind. Jeweils eine der Öffnungen 16, 17 zur Blasform ist zusammen mit jeweils einer Öffnung 18 bzw. 19 zur Entlüftungsleitung 20 mit dem gleichen Umlenkraum 12a bzw. 12b verbunden. Ist das Ventil 6 vollständig geöffnet, so steht somit der doppelte Durchflussquerschnitt, verglichen mit dem Blasvorgang gemäß Fig. 1, zum Entlüften des fertigen Behälters 4 zur Verfügung, so dass die Entlüftung sehr rasch vonstatten gehen kann, was zu einer Verkürzung des Blaszyklus führt.

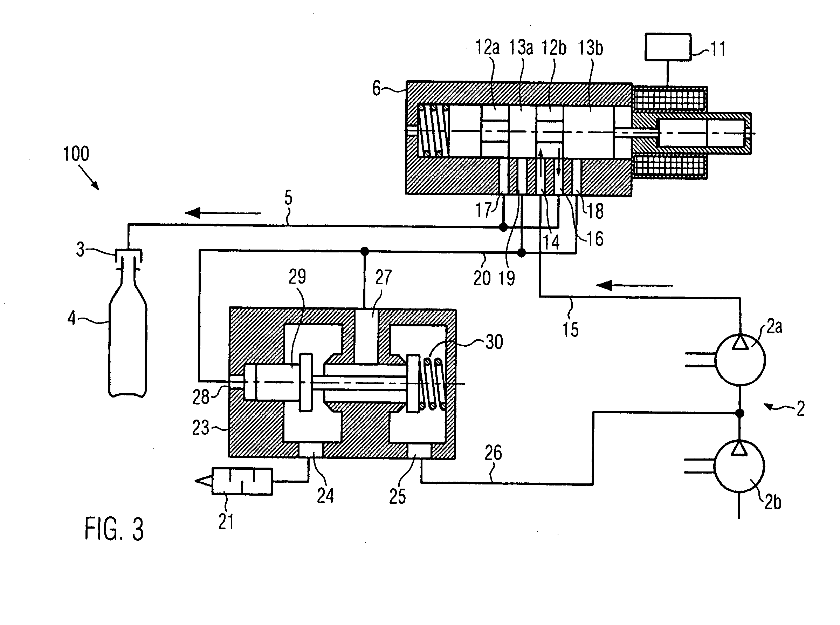

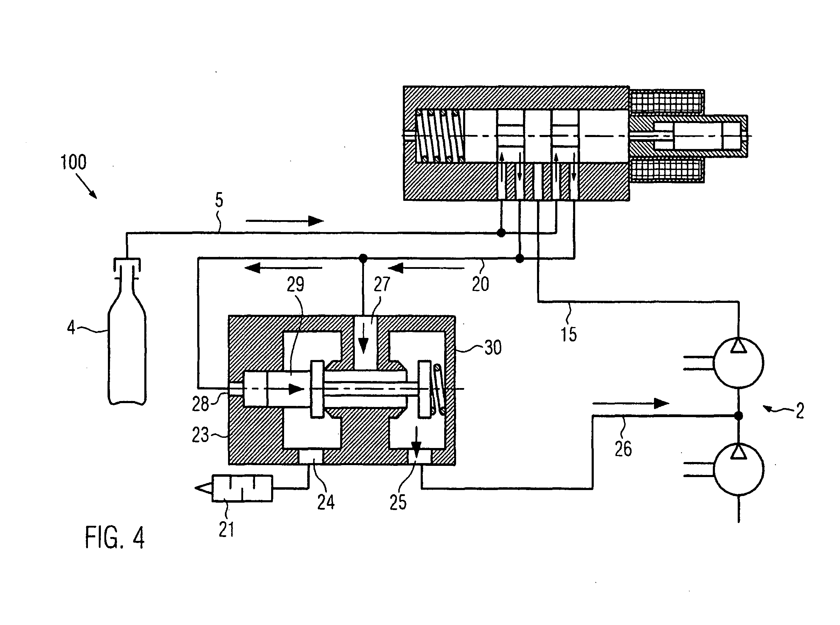

Die Fig. 3 und 4 zeigen ein weiteres Ausführungsbeispiel einer Vorrichtung 100 zur Durchführung des erfindungsgemäßen Verfahrens, wobei gleiche bzw. vergleichbare Bauteile mit den gleichen Bezugszeichen gekennzeichnet und nicht nochmals erläutert sind. Auch die Vorrichtung 100 verwendet ein Proportionalventil 6 als Einrichtung zum Verändern des Massenstroms der Blasluft, wobei das Proportionalventil 6 der Vorrichtung 100 in Konstruktion und Steuerung dem Proportionalventil der Vorrichtung 1 entspricht.

Fig. 3 zeigt den Blasvorgang. Die Vorrichtung 100 enthält eine Druckluftquelle 2, die hier zwei Kompressoren bzw. zwei Kompressorstufen eines Kompressors 2a und 2b umfasst.

In die Entlüftungsleitung 20 ist ein zusätzliches Entlüftungsventil 23 eingeschaltet. Das Entlüftungsventil 23 enthält zwei Ausgangsöffnungen 24 und 25. Die Ausgangsöffnung 24 führt über den Schalldämpfer 21 in die Umgebungsluft. Die Öffnung 25 führt über eine Recyclingleitung 26 in die Druckluftquelle 2, bevorzugt zwischen die beiden Kompressorstufen 2a, 2b. Das Entlüftungsventil 23 weist weiterhin zwei Einlassöffnungen 27 und 28 auf, die beide mit der Entlüftungsleitung 20 verbunden sind. Das Entlüftungsventil 23 enthält einen axial verschiebbaren Ventilkolben 29, der die Einlassöffnung 27 wahlweise mit einer der beiden Auslassöffnungen 24, 25 verbindet. Der Ventilkolben 29 wird von einer Stirnseite durch die Entlüftungsleitung 20 beaufschlagt und stützt sich auf der anderen Stirnseite auf einer Feder 30 ab. Die Feder 30 bestimmt den Schaltdruck, bei dessen Überschreitung sich der Ventilkolben 29 bewegt. Der Schaltdruck liegt bevorzugt bei 20 bar. Wenn somit der Druck in der Entlüftungsleitung 20 den Federdruck 30 übersteigt, d.h. die Entlüftungsleitung 20 ausreichend Druck führt, damit sich ein Recyceln der Druckluft lohnt, so wird der Ventilkolben 29 in eine Stellung verschoben, in der die Entlüftungsleitung 20 mit der Recyclingleitung 26 verbunden wird, so dass die den Behälter 4 entweichende Blasluft wieder der Druckluftquelle 2 zugeführt wird.

Fällt der Druck in der Entlüftungsleitung 20 unter den Federdruck der Feder 30 ab, so wird die Einlassöffnung 27, über den Schalldämpfer 21, mit der Umgebung verbunden und die restliche Blasluft abgeblasen.

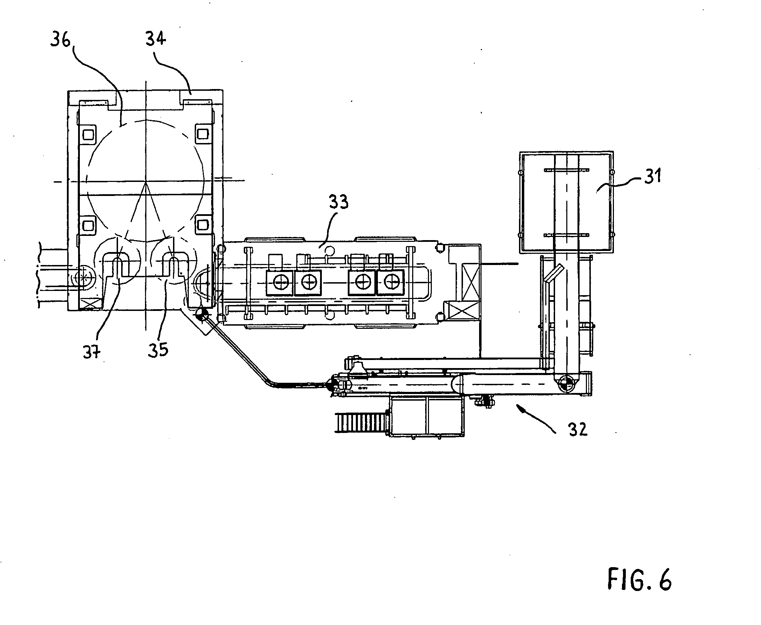

Fig. 6 zeigt eine Anlage zum Herstellen von Behältern 4, wobei die Vorformlinge in einem Speicher 31 gespeichert und in einer Vereinzelungsvorrichtung 32 vereinzelt, ausgerichtet und einem Heizofen 33 zur Erwärmung zugeführt werden. In dem Heizofen 33 wird jedem Vorformling ein Temperaturprofil aufgeprägt, das eine definierte Verformung in jede Richtung erlaubt. Nach dem Heizofen 33 werden sie über den Einlaufstern 35 dem Blasrad 36 zugeführt, an dem äquidistant hier nicht gezeigte Blasstationen angebracht sind. Die Blasstationen weisen je mindestens eine Einrichtung 6 zur gesteuerten Zufuhr von Blasluft sowie in der Regel auch eine die Vorformlinge bezüglich ihrer Längsachse streckende Reckstange auf. Vorzugsweise ist jede Blasstation dazu ausgebildet, das erfindungsgemäße Verfahren durchzuführen. Alternativ können die Blasstationen auch mehrere Einrichtungen 6 aufweisen, die die Luftverteilung / Luftsteuerung während der Herstellung der Behälter übernehmen. So kann z.B. eine zweite Einrichtung 6 pro Blasstation zur Steuerung der Luftrückgewinnung aus der Flasche vorhanden sein. Die fertigen Behälter 4 werden vom Blasrad 36 mittels eines Auslaufsterns 37 an die folgenden Maschinen weitergegeben.

In Abwandlung der beschriebenen und gezeichneten Ausführungsbeispiele kann anstelle des Proportionalventils 6 jede andere geeignete Einrichtung zum Verändern des Durchflussquerschnittes für die Blasluft eingesetzt werden. Werden mit dem erfindungsgemäßen Verfahren Lebensmittelbehälter, wie beispielsweise Getränkeflaschen oder dgl. hergestellt, so sollten ölfreie und auch in anderer Hinsicht lebensmittelrechtlich unbedenklich arbeitende Ventile oder dgl. eingesetzt werden.

## Patentansprüche

1. Verfahren zum Herstellen von Behältern (4) aus Kunststoff in einer Blasformmaschine, wobei unter Druck stehende Blasluft in Abhängigkeit von einem vorbestimmten Ablauf des Blasvorgangs in einen Preform eingeleitet wird, **dadurch gekennzeichnet, dass** ein Verlauf (M) eines Massenstroms der Blasluft in Abhängigkeit vom vorbestimmten Ablauf des Blasvorgangs vorgegeben und die Blasluft entsprechend des vorgegebenen Verlaufs (M) des Massenstroms in den Preform eingeleitet wird, wobei die unter Druck stehende Blasluft über ein Proportionalventil (6) in den Preform eingeleitet und das Proportionalventil (6) gemäß dem vorgegebenen Verlauf (M) des Massenstroms betätigt wird.

2. Verfahren nach Anspruch 1, **dadurch gekennzeichnet, dass** der Verlauf (M) des Massenstroms der Blasluft nach dem zeitlichen Ablauf des Blasvorgangs vorgegeben wird.

3. Verfahren nach Anspruch 1 oder 2, **dadurch gekennzeichnet, dass** der Verlauf (M) des Massenstroms der Blasluft nach einer Winkelstellung eines Blasrades vorgegeben wird.

4. Verfahren nach einem der Ansprüche 1 bis 3, **dadurch gekennzeichnet, dass** bei Qualitätsabweichungen am Behälter (4) der Verlauf (M) des Massenstroms korrigiert wird.

5. Verfahren nach einem der Ansprüche 1 bis 4, **dadurch gekennzeichnet, dass** der Verlauf (M) des Massenstroms anhand einer Blaskurve dokumentiert wird.

6. Verfahren nach einem der Ansprüche 1 bis 5, **dadurch gekennzeichnet, dass** der tatsächliche Massenstrom während des Blasformens bestimmt und zum Regeln des Massenstroms verwendet wird.

7. Verfahren nach einem der Ansprüche 4 bis 6, **dadurch gekennzeichnet, dass** das Proportionalventil (6) zum Entlüften des Behälters (4) verwendet wird.

8. Verfahren nach einem der Ansprüche 4 bis 7, **dadurch gekennzeichnet, dass** das Proportionalventil (6) mit einem Entlüftungsventil (23) zum Entlüften des Behälters (4) und Recyceln der Blasluft verbunden ist.

9. Verfahren nach einem der Ansprüche 1 bis 8, **dadurch gekennzeichnet, dass** die Blasluft ein Druckniveau von 10 bis 50 bar, bevorzugterweise von 20 bis 40 bar aufweist.

10. Verfahren nach einem der Ansprüche 1 bis 9, **dadurch gekennzeichnet, dass** der Blasvorgang in einer Blasstation durchgeführt wird, die auf einem rotierenden Blasrad befestigt sind.

## Claims

1. Method of producing containers (4) of plastic in a blow moulding machine, whereby pressurised blowing air is introduced into a preform as a function of a predefined sequence of the blowing process, **characterised in that** a curve (M) is predefined for a mass flow of the blowing air as a function of the predefined sequence of the blowing process and the blowing air is introduced into the preform in accordance with the predefined curve (M) for the mass flow, and the pressurised blowing air is introduced into the preform via a proportional valve (6) and the proportional valve (6) is operated on the basis of the predefined curve (M) for the mass flow.

2. Method as claimed in claim 1, **characterised in that** the curve (M) for the mass flow of blowing air is predefined on the basis of the time sequence of the blowing process.

3. Method as claimed in claim 1 or 2, **characterised in that** the curve (M) for the mass flow of blowing air is predefined on the basis of an angular position of a blowing wheel.

4. Method as claimed in one of claims 1 to 3, **characterised in that** the curve (M) for the mass flow is corrected in the event of quality variances on the container (4).

5. Method as claimed in one of claims 1 to 4, **characterised in that** the curve (M) for the mass flow is documented by means of a blowing curve.

6. Method as claimed in one of claims 1 to 5, **characterised in that** the actual mass flow is determined during the blow moulding process and used to regulate the mass flow.

7. Method as claimed in one of claims 4 to 6, **characterised in that** the proportional valve (6) is used to vent the container (4).

8. Method as claimed in one of claims 4 to 7, **characterised in that** the proportional valve (6) is connected to a venting valve (23) for venting the container (4) and recycling the blowing air.

9. Method as claimed in one of claims 1 to 8, **characterised in that** the blowing air is at a pressure level of 10 to 50 bar, more preferably 20 to 40 bar.

10. Method as claimed in one of claims 1 to 9, **characterised in that** the blowing process is conducted in a blowing station which is mounted on a rotating blowing wheel.

## Revendications

1. Procédé pour fabriquer des récipients (4) en matière plastique dans une machine de soufflage, selon lequel de l'air de soufflage sous pression est introduit dans une préforme en fonction d'un déroulement prédéfini de l'opération de soufflage, **caractérisé en ce qu'**une courbe (M) d'un flux massique de l'air de soufflage est prédéfinie en fonction du déroulement prédéfini de l'opération de soufflage, et l'air de soufflage est introduit dans une préforme suivant la courbe prédéfinie (M) du flux massique, étant précisé que l'air de soufflage sous pression est introduit dans la préforme par une soupape proportionnelle (6) et que ladite soupape proportionnelle (6) est actionnée suivant la courbe prédéfinie (M) du flux massique.

2. Procédé selon la revendication 1, **caractérisé en ce que** la courbe (M) du flux massique de l'air de soufflage est prédéfinie suivant le déroulement dans le temps de l'opération de soufflage.

3. Procédé selon la revendication 1 ou 2, **caractérisé en ce que** la courbe (M) du flux massique de l'air de soufflage est prédéfinie suivant une position angulaire d'une roue de soufflage.

4. Procédé selon l'une des revendications 1 à 3, **caractérisé en ce que**, en cas d'écarts de qualité sur le récipient (4), la courbe (M) du flux massique est corrigée.

5. Procédé selon l'une des revendications 1 à 4, **caractérisé en ce que** la courbe (M) du flux massique est documentée à l'aide d'une courbe de soufflage.

6. Procédé selon l'une des revendications 1 à 5, **caractérisé en ce que** le flux massique réel est défini pendant le soufflage et est utilisé pour réguler le flux massique.

7. Procédé selon l'une des revendications 4 à 6, **caractérisé en ce que** la soupape proportionnelle (6) est utilisée pour évacuer de l'air du récipient (4).

8. Procédé selon l'une des revendications 4 à 7, **caractérisé en ce que** la soupape proportionnelle (6) est reliée à une soupape d'évacuation d'air (23) pour évacuer de l'air du récipient (4) et recycler l'air de soufflage.

9. Procédé selon l'une des revendications 1 à 8, **caractérisé en ce que** l'air de soufflage présente un niveau de pression de 10 à 50 bar, de préférence de 20 à 40 bar.

10. Procédé selon l'une des revendications 1 à 9, **caractérisé en ce que** l'opération de soufflage est effectuée dans une station de soufflage qui est fixée à une roue de soufflage tournante.
